# EUROPEAN PATENT APPLICATION

(11) **EP 4 653 800 A1**
(43) Date of publication of application: **26.11.2025**
(21) Application number: 25173218.6
(22) Date of filing: 29.04.2025
(51) Int. Cl.: G01B 3/1007, G01B 3/1043

(54) **TAPE MEASURE WITH REPLACEABLE BLADE CARTRIDGE**

(30) Priority: 20.05.2024 US 202418668313
(71) Applicant: Stanley Black & Decker, Inc., New Britain, CT 06053 (US)
(72) Inventor: ORSINI, Antony J., Cheshire, 06410 (US)
(74) Representative: SBD IPAdmin

(57) **Abstract**

A retractable rule assembly includes a housing, a coil spring assembly, and a replaceable blade cartridge. The coil spring assembly includes a first coupler. The replaceable blade cartridge is configured to be selectively mounted in and removed from the housing when a displaceable panel of the housing is in an open position. The replaceable blade cartridge comprises an elongated blade, a reel, and a second coupler. The second coupler is constructed and arranged to engage with the first coupler when the replaceable blade cartridge is mounted in the housing, such that the first coupler and the second coupler become rotatably coupled. When the first coupler and the second coupler are rotatably coupled, the coil spring assembly is biased to rotate the replaceable blade cartridge in a direction that winds the blade onto the reel when the blade is extending outwardly of the housing.

## Description

### FIELD

The present patent application relates to tape measures and blade cartridge assemblies for the tape measures.

### BACKGROUND

A tape measure or tape rule assembly is a measuring device. The tape measure generally includes an elongated rule blade that is mounted on a reel rotatably disposed within a housing. The blade may be a flexible tape or a retractable tape. The blade may be resiliently coiled within the housing. That is, the blade may be spring biased into the housing. The blade is normally printed with incremental measuring marks/indicia for measuring distances. The blade is retracted into the housing for storage by coiling the blade about the reel. A front of the blade generally includes a hook or an end hook that provides a surface to engage and fix the end of the blade against a point to be measured from, so the measurement can be made from the hook to a position on the blade indicated by the measuring indicia. The housing may often have a lock mechanism that allows the blade to be locked into a certain position relative to the housing (e.g., locked into an extended position, preventing the spring bias from retracting the blade into the housing). The housing may also often have a belt clip located thereon that allows users to clip the tape measure onto their belt. Further, in the tape measure assembly, the blade is typically fixed to a motor assembly that includes the spring therein and is tensioned against a fixed hub. Traditional springs are attached to reels or cases in tape measure via physical interlocks, cut into one or more of the spring and an attaching surface, or are assembled with physical retainers such as rivets, screws, or bolts.

To measure a workpiece, a length of the blade is pulled out of the housing to span the distance to be measured and the blade or hook is held against the workpiece so that gradation lines and numbers printed on the blade can be read against a point on the workpiece. To measure a distance between two objects or surfaces, the hook at the free end of the blade may be temporarily secured or placed against an object or surface. Distances can then be marked with a marking tool, such as a pencil, directly onto the surface measured.

The blade of a self-retracting tape measure may be the first component to wear out 8 out of 10 times, while the rest of the components of the tape measure are still fully functional. Also, with the introduction of more complex retraction mechanisms as well as technology into the tape measure, there may be a need to make the tape measure maintainable with replaceable wear components.

The present patent application provides improvements in the tape measures or retractable rule assemblies.

### SUMMARY

The present patent application provides a retractable rule assembly and a blade cartridge assembly for a retractable rule assembly.

One aspect of the present patent application provides a retractable rule assembly. The retractable rule assembly comprises a housing, a coil spring assembly, and a replaceable blade cartridge. The housing includes a displaceable panel. The displaceable panel is configured to be selectively moved between a closed position and an open position. The coil spring assembly is disposed in the housing. The coil spring assembly includes a coil spring and a first coupler. The replaceable blade cartridge is configured to be selectively mounted in and removed from the housing when the displaceable panel is in the open position. The replaceable blade cartridge comprises an elongated blade, a reel, and a second coupler. The blade is wound on the reel and is constructed and arranged to extend outwardly through an opening in the housing. The second coupler is constructed and arranged to engage with the first coupler when the replaceable blade cartridge is mounted in the housing, such that the first coupler and the second coupler become rotatably coupled. When the first coupler and the second coupler are rotatably coupled, the coil spring assembly is biased to rotate the replaceable blade cartridge in a direction that winds the blade onto the reel when the blade is extending outwardly of the housing.

Implementations of the foregoing aspects may include one or more of the following features.

In an aspect, the displaceable panel may comprise a hinged door panel.

In an aspect, the displaceable panel may comprise a removable door panel.

In an aspect, the first coupler of the coil spring assembly may comprise inner splines, and the second coupler of the blade cartridge may comprise outer splines.

In an aspect, the outer splines of the blade cartridge may form part of an inner wall of the reel.

In an aspect, the inner splines of the coil spring assembly may form part of an outer wall of a coil spring housing.

In an aspect, the retractable rule assembly may further comprise a lock constructed and arranged to engage with the coil spring assembly to prevent rotation for the blade cartridge to be removed from the housing.

In an aspect, the lock may be movable between a locked position and a released position. The lock may be operatively connected with the displaceable panel such that it moves from the released position to the locked position upon displacement of the displaceable panel from the closed position to the open position.

In an aspect, the retractable rule assembly may further comprise a ratchet for the spring cartridge assembly. The ratchet may be configured to slip to one side so as to allow a spring of the lock to tension independently of the blade.

In an aspect, the spring of the lock may be configured to deflect out of a lock receiving portion of the coil spring housing by a ramp formed on an edge of the lock receiving portion. The rotation of the spring cartridge assembly against the ratchet may be configured to change a preload or a torque on the spring of the lock when the door is in the open position.

In an aspect, the retractable rule assembly may further comprise a slidelock that is configured to disengage from holding the blade when the door is in the open position.

In an aspect, the retractable rule assembly may further comprise an interlock disposed on the door. The interlock is configured to enable the door to move to the open position only when the blade is fully retracted.

In an aspect, the housing may comprise a blade opening through which the blade extends from the housing. The displaceable panel may comprise a portion of the structure defining the blade opening, such that a side portion of the blade opening is removed to form a slot when the displaceable panel is moved to the open position, the slot providing a region through which a portion of the blade can be removed from the housing and through which a new blade can be received.

Another aspect of the present patent application provides a replaceable blade cartridge assembly for a retractable rule assembly. The blade cartridge assembly comprises an elongated blade, a reel, and a second coupler. The blade is wound on the reel. The reel includes an outer wall containing the blade. The second coupler forms part of the reel and is constructed and arranged to engage with a first coupler of a coil spring assembly when the blade cartridge assembly is mounted in a housing of the retractable rule assembly, such that the first coupler on the housing of the retractable rule assembly and the second coupler on the retractable rule assembly become rotatably coupled and such that an axis of rotation of the reel and an axis of rotation of the coil spring assembly are aligned.

Implementations of the foregoing aspects may include one or more of the following features.

In an aspect, the first coupler of the coil spring assembly may comprise inner splines that form part of an outer wall of a coil spring housing of the coil spring assembly. The second coupler of the blade cartridge assembly may comprise outer splines. The outer splines of the blade cartridge assembly may form part of an inner wall of the reel.

In an aspect, the blade cartridge assembly may further comprises a blade cartridge assembly package that comprises a backing and a cover. The cover may include a cavity formed therein. The cavity and the backing may be configured to form a space for enclosing the blade cartridge assembly. The cover includes a clear plastic portion that forms the cavity. The blade cartridge assembly may be disposed between the clear plastic portion and the backing.

In an aspect, the cover may further comprise a backing engaging portion. The backing may further comprise a cover engaging portion. The cover engaging portion and the backing engaging portion are configured to releasably secure the backing to the cover.

In an aspect, the backing may be configured to be removable from the cover to facilitate access to the blade cartridge assembly disposed between the cover and the backing.

Yet another aspect of the present patent application provides a method for removing and replacing a blade cartridge of a retractable rule assembly. The retractable rule assembly comprises a housing, the housing having a displaceable panel, the displaceable panel configured to be selectively moved between a closed position and an open position; a coil spring assembly disposed in the housing, the coil spring assembly including a coil spring and a first coupler; the blade cartridge includes a replaceable blade cartridge configured to be selectively mounted in the housing, the replaceable blade cartridge comprising an elongated blade, a reel, and a second coupler, the blade being wound on the reel and constructed and arranged to extend outwardly through an opening in the housing. The method comprises moving the displaceable panel of the retractable rule assembly from the closed position to the open position; removing the replaceable blade cartridge from the housing when the displaceable panel is in the open position, the removing the replaceable blade cartridge from the housing includes disengaging the second coupler of the replaceable blade cartridge from the first coupler of the coil spring assembly disposed in the housing; and positioning a new replaceable blade cartridge in the housing when the displaceable panel is in the open position, the new replaceable blade cartridge comprising a new elongated blade, a new reel, and a new second coupler, the new blade being wound on the new reel and constructed and arranged to extend outwardly through the opening in the housing, the positioning the new replaceable blade cartridge in the housing includes engaging the new second coupler of the new replaceable blade cartridge with the first coupler of the coil spring assembly disposed in the housing, such that the first coupler and the new second coupler become rotatably coupled. When the first coupler and the new second coupler are rotatably coupled, the coil spring assembly is biased to rotate the new replaceable blade cartridge in a direction that winds the new blade onto the new reel when the new blade is extending outwardly of the housing.

Implementations of the foregoing aspects may include one or more of the following features.

In an aspect, the moving the displaceable panel of the retractable rule assembly to the open position may include locking the coil spring assembly to prevent rotation of the blade cartridge to be removed from the housing.

These and other aspects of the present patent application, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment of the present patent application, the structural components illustrated herein are drawn to scale. It is to be expressly understood, however, that the drawings are for the purpose of illustration and description only and are not intended as a definition of the limits of the present patent application. It shall also be appreciated that the features of one embodiment disclosed herein can be used in other embodiments disclosed herein. As used in the specification and in the claims, the singular form of "a", "an", and "the" include plural referents unless the context clearly dictates otherwise.

### BRIEF DESCRIPTION OF THE DRAWINGS

FIG. 1A shows an exemplary retractable rule assembly according to an embodiment of the present patent application, wherein a displaceable panel of a housing of the retractable rule assembly is in an open position and a replaceable blade cartridge of the retractable rule assembly is removed from the housing and is shown outside the housing;
FIG. 1B shows the retractable rule assembly of FIG. 1A, wherein the displaceable panel of the retractable rule assembly is being moved to a closed position;
FIG. 2 shows a partial side perspective view of a coil spring assembly of the retractable rule assembly of FIG. 1A, wherein lock receiving portions of the coil spring assembly are shown;
FIG. 3 shows a cross sectional view of the coil spring assembly;
FIG. 4 shows an exploded perspective view of the coil spring assembly, and a perspective view of a reel of the replaceable blade cartridge according to an embodiment of the present patent application;
FIG. 5 shows another perspective view of the reel of the replaceable blade cartridge;
FIG. 6 shows another perspective view of the reel of the replaceable blade cartridge with an elongated blade wound on the reel according to an embodiment of the present patent application;
FIG. 7 shows a cutaway view of the retractable rule assembly, wherein the displaceable panel of the housing is in the closed position and a lock, which is operatively connected with the displaceable panel, is in its released position according to an embodiment of the present patent application;
FIG. 8 shows a cutaway view of the retractable rule assembly, wherein the displaceable panel of the housing is in the open position and the lock, which operatively connected with the displaceable panel, is in its lock position according to an embodiment of the present patent application;
FIGS. 9 and 10 show a side perspective view and a side view of a first housing portion according to an embodiment of the present patent application, wherein FIG. 9 shows the first housing portion without a spring of the lock and FIG. 10 shows the first housing portion with the spring of the lock disposed therein;
FIG. 11 shows a perspective view of the spring of the lock according to an embodiment of the present patent application;
FIG. 12 shows a perspective view of the lock according to an embodiment of the present patent application, wherein both the spring and a plunger of the lock are shown;
FIG. 13 shows a side perspective view of a second housing portion according to an embodiment of the present patent application;
FIG. 14 shows a side perspective view of the first and the second housing portions, stacked or disposed on top of each other, according to an embodiment of the present patent application;
FIGS. 15 and 16 show perspective views of the displaceable panel of the retractable rule assembly according to an embodiment of the present patent application;
FIGS. 17-19 show various cross-sectional views of the retractable rule assembly according to an embodiment of the present patent application, where the displaceable panel is not shown in FIGS. 17-19 to better illustrate other portions/components the retractable rule assembly;
FIG. 20 shows a perspective view of a new replaceable blade cartridge of the retractable rule assembly in its packaging/package according to an embodiment of the present patent application;
FIG. 21 shows a backing of the blade cartridge packaging/package being removed to access a new replaceable blade cartridge of the retractable rule assembly according to an embodiment of the present patent application;
FIGS. 22 and 23 show perspective views of the new replaceable blade cartridge packaging/package (with backing removed) being disposed next to the retractable rule assembly (with the displaceable panel of the retractable rule assembly in its open position) so as to replace/position the new replaceable blade cartridge in the housing of the retractable rule assembly according to an embodiment of the present patent application;
FIG. 24 shows a ratchet system in accordance with another embodiment of the present patent application; and
FIGS. 25-28 show another embodiment of the present patent application in which when the door is opened, it causes a slide lock to lift/rise so that the blade is not clamped to the housing and, as the blade is unclamped from the housing, a user can remove the reel from the housing 12, wherein FIGS. 26-28 show the door in its closed position, its intermediate position, and its open position, respectively.

### DETAILED DESCRIPTION

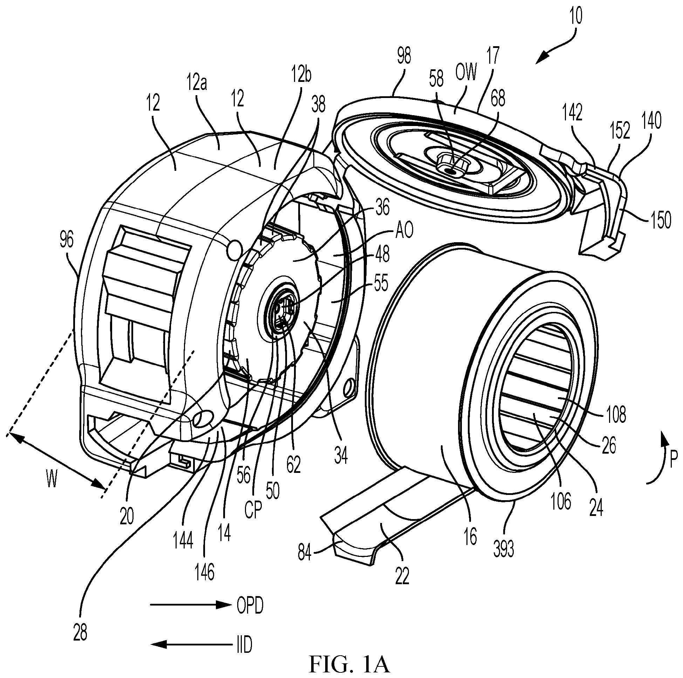

The present patent application provides a retractable rule assembly 10. The retractable rule assembly 10 comprises a housing 12, a coil spring assembly 14, and a replaceable blade cartridge 16. The housing 12 includes a displaceable panel 17. The displaceable panel 17 is configured to be selectively moved between a closed position and an open position. FIG. 1A shows the displaceable panel 17 in an open position. The coil spring assembly 14 is disposed in the housing 12. The coil spring assembly 14 includes a coil spring 18 and a first coupler 20. The replaceable blade cartridge 16 is configured to be selectively mounted in and removed from the housing 12 when the displaceable panel 17 is in the open position. The replaceable blade cartridge 16 comprises an elongated blade 22, a reel 24, and a second coupler 26. The blade 22 is wound on the reel 24 and is constructed and arranged to extend outwardly through an opening 28 in the housing 12. The reel 24 may include an outer wall containing the blade 22. The second coupler 26 is constructed and arranged to engage with the first coupler 20 when the replaceable blade cartridge 16 is mounted in the housing 12, such that the first coupler 20 and the second coupler 26 become rotatably coupled. When the first coupler 20 and the second coupler 26 are rotatably coupled, the coil spring assembly 14 is biased to rotate the replaceable blade cartridge 16 in a direction that winds the blade 22 onto the reel 24 when the blade 22 is extending outwardly of the housing 12.

The blade cartridge 16 may interchangeably referred to as replaceable blade cartridge or as replaceable blade cartridge assembly 16. The second coupler 26 may form part of the reel 24 and may be constructed and arranged to engage with the first coupler 20 of the coil spring assembly 14 when the blade cartridge assembly 16 is mounted in the housing 12 of the retractable rule assembly 10, such that the first coupler 20 on the housing 12 of the retractable rule assembly 10 and the second coupler 26 on the retractable rule assembly 10 become rotatably coupled and such that an axis of rotation of the reel 24 and an axis of rotation of the coil spring assembly 14 are aligned.

The retractable rule assembly may interchangeably referred to as tape measure or tape rule case/assembly. The present patent application provides a self-retracting tape measure having a multi-part assembly that enables the blade 22 (and the reel 24) to be separated from the coil spring 18 (and the coil spring assembly 14) in an axial orientation. The "axial direction" may refer to the direction of the axis of rotation of the reel 24 defined by a shaft/spindle 50. Although in the discussions below the blade cartridge 16 (including the blade 22 and the reel 24) is easily and selectively mounted in the housing 12 and removed from the housing 12 (when the displaceable panel 17 is in its open position), in other embodiments, the multi-part assembly configuration of the retractable rule assembly 10 may enable replacement of other components of the retractable rule assembly 10 including the coil spring assembly 14 (along with the coil spring 18, etc.) and/or the shaft 50 if/as needed.

The housing 12 may be constructed to easily and comfortably fit in a hand of the user because it optimizes the use of space within the housing 12 to house the blade 22, the reel 24, the coil spring assembly 14 including the coil spring 18, the shaft 50, a lock 112, and other components of the retractable rule assembly 10. The housing 12 may be constructed of, for example, a molded plastic material.

The housing 12 may include a pair of cooperating housing members 12a, 12b (e.g., a first housing member 12a and a second housing member 12b) and the displaceable panel 17. The housing members 12a, 12b may include portions along abutting free edges thereof. The portions may help secure the molded housing members 12a, 12b of the assembled rule assembly 10 together. An outer side wall 96 of the housing member 12a and an outer side wall 98 of displaceable panel 17 may form outer side walls OW of the housing 12 when the displaceable panel 17 is its closed position. The second housing member 12b may be disposed between the first housing member 12a and the displaceable panel 17. The second housing member 12b and the first housing member 12a may be movable toward one another in the axial direction into cooperating relation to define most of the housing 12 (except for the displaceable panel 17).

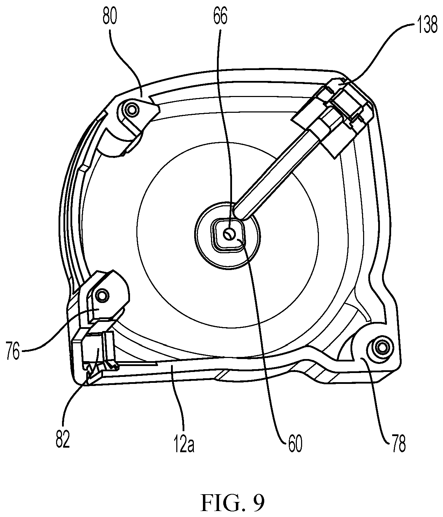

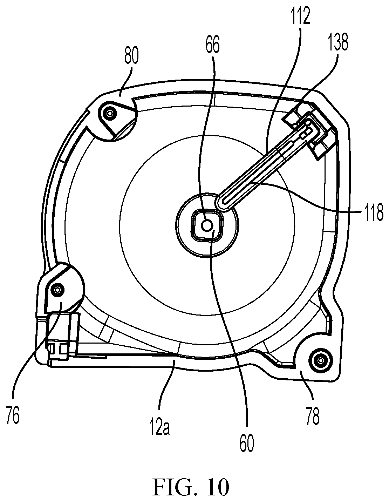

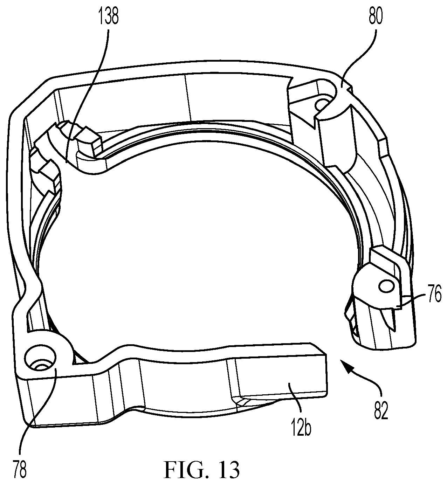

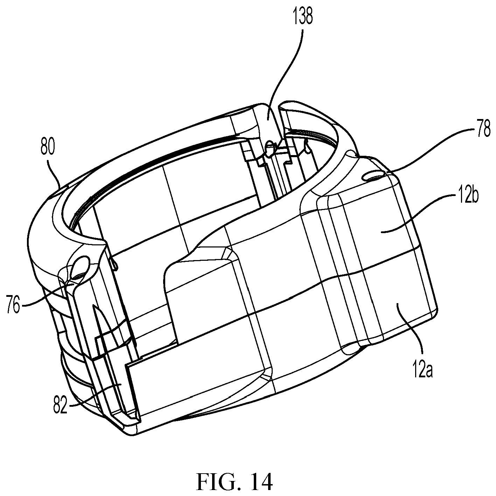

Referring to FIGS. 9-10 and 13-14, each housing member 12a, 12b may include three corner portions 76, 78, 80. For example, the first corner portion 76 may be adjacent a blade opening 82, the second corner portion 78 may be at an opposite bottom end of the housing 12, and the third corner portion 80 may be in a peripheral top portion or portions of the housing 12. Each corner portion 76, 78, 80 of each housing member 12a, 12b may include either a recess or a projection and an opening in the respective recess/projection. At each corner portion 76, 78, 80, the recess/projection of one of the housing members 12a, 12b may be configured to receive or engage with the projection/recess of the other of the housing member 12a, 12b. Also, the opening in the recess/projection of one of the housing members 12a, 12b may be configured to align with the opening in the projection/recess of the other of the housing members 12a, 12b. Fasteners may then be positioned in aligned openings of the corner portions 76, 78, 80 of the housing member 12a, 12b. Thus, it can be appreciated that the housing members 12a, 12b may be secured together using fasteners in these locations.

The combined width W (as shown in FIG. 1A) of the first and the second housing members 12a, 12b, when they are secured to each other, may be configured to receive and to enclose the reel 24 with the blade 22 mounted thereon, and the coil spring assembly 14 (including the coil spring 18 and the shaft 50) within the housing 12.

The housing 12 may include a control or electronics module (including visual indicators, accelerometers, counters and/or other electronic devices) that can perform functions such as tracking the number of times that the blade 22 has been extended from the blade opening 82, and indicating, via an indicator, to a user when a replacement blade cartridge should be replaced. The indicator may provide an indication of the status of the replaceable blade cartridge 16 positioned in the housing 12. The indicator may include various features such as a visible light emission that may be viewable by the user. The indicator may also include various pulsing rates, light intensities, colors, and other light features to assist in providing different statuses of the replaceable blade cartridge 16. In some embodiments, the indicator may include a length, and the indicator may be a light emitted in a movement along a length or portions of the indicator. Thus, the indicator may provide an indication of the status of the replaceable blade cartridge 16 such as a lifespan of the replaceable blade cartridge 16, or other appropriate features. The electronics may be optional.

The housing 12 may include a storage space SS in the first and the second housing portions 12a, 12b and an access opening AO to the storage space SS. The access opening AO may extend through the first and the second housing portions 12a,12b.

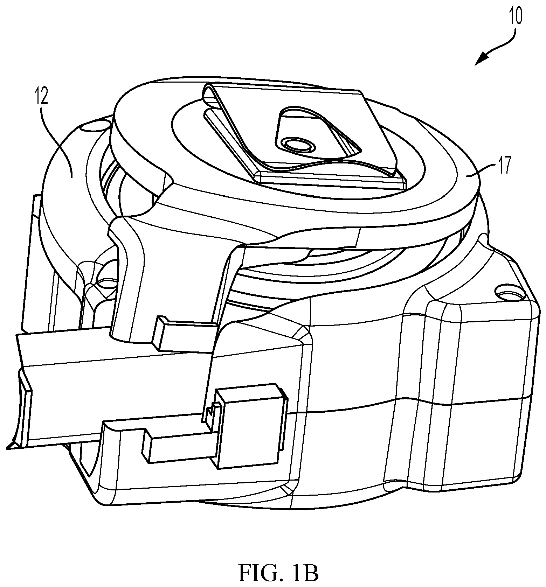

The displaceable panel 17 may be part of the housing 12. The displaceable panel 17 may be interchangeably referred to as a door. The displaceable panel (or opening) 17 on the side of the rule assembly/case 10 may be configured to allow for the blade reel 24 to be removed from the rule assembly 10 (and from the coil spring assembly 14) without disassembly of any components of the rule assembly 10. As shown in FIG. 1B, the displaceable panel 17 and the rule assembly 10 may be configured such that the displaceable panel 17 does not require any tools to open the displaceable panel 17 or to move the displaceable panel 17 between its open and closed positions. The displaceable panel 17 may be configured to be releasably latched or locked, via a releasable interlocking mechanism (a snap-fit, a friction-fit, a press-fit, an interference-fit, etc.) that can be operated by the user, to the housing 12. The interlock may be disposed on the door/displaceable panel 17. The interlock may be configured to enable the displaceable panel 17 to move to the open position only when the blade 22 is fully retracted. That is, the interlock on the displaceable panel 17 is configured such that the displaceable panel 17 will not open unless the blade 22 is fully retracted.

The displaceable panel 17 may include a hinged door panel. The displaceable panel 17 may include a pivotable door panel. The displaceable panel 17 may be configured to be connected to the second housing member 12b of the housing 12 via hinge or pivot connections. These connections may be positioned near/at a corner portion 138 of the housing 12 (as shown in FIGS. 9-10 and 13-14). The corner portion 138 may be the fourth corner portion of the housing 12, may be in the peripheral top portion or portions of the housing 12, and may be at an opposite end to the third corner portion 80 of the housing 12. The connections may include a hinge or a pivot. The connections may include a shaft that may be integrally formed at a corner portion of the displaceable panel 17 and a shaft engaging portion formed on the corresponding end of the second housing member 12b of the housing 12. The connections may include a first hinge portion, a second hinge portion, and a shaft that may be constructed to pivotally connect the first hinge portion to the second hinge portion. For example, the second housing member 12b may include the first hinge portion, and the displaceable panel 17 may include the second hinge portion. The displaceable panel 17 may be configured to close the access opening AO to the storage compartment SS in the housing 12. The access opening AO of the storage compartment SS may be opened by pivoting/moving/swinging the displaceable panel 17 about the hinge/pivot in the direction of action arrow P. The displaceable panel 17 may be pivoted outwardly at an angle of approximately 90 degrees to a fully open position.

The displaceable panel 17 may include a removable door panel. The displaceable panel 17 may include a slidable door panel.

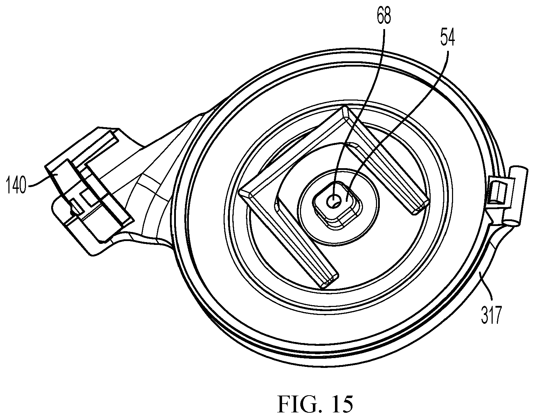

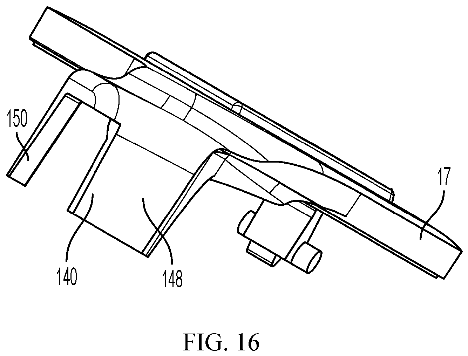

The displaceable panel 17 may be configured to incorporate part or all of the blade opening 82 of the rule assembly 10. The displaceable panel 17 may incorporate an opening to allow the blade 22 to be contacted by an operator/user. Referring to FIGS. 1, and 15-16, the housing 16 may include the blade opening 82 through which the blade 22 extends from the housing 16. The displaceable panel 17 may comprise a portion 140 of the structure defining the blade opening 82, such that a side portion 142 of the blade opening 82 is removed to form a slot 144 when the displaceable panel 17 is moved to the open position. The rest/remaining of the structure (i.e., other than the portion 140 of the displaceable panel 17) defining the blade opening 82 may be part of the first housing portion 12a and the second housing portion 12b, and in another alternative embodiment (not shown) can be only a part of first housing portion and not second housing portion. As shown in FIGS. 1A and 16, the portion 140 may have a U-shaped configuration that includes two legs 148, 150 and a bight portion 152 joining the legs 148, 150. The bight portion 152 may form the side portion 142 of the blade opening 82 when the displaceable panel 17 is in its closed position. In one embodiment, the leg 148 may form the top portion of the blade opening 82 and the leg 150 may form the bottom portion of the blade opening 82 when the displaceable panel 17 is in its closed position. The leg 148 may be optional. The slot 144 provides a region 146 through which a portion of the blade 22 can be removed from the housing 16 and through which a new blade 22' can be received. The replaceable blade cartridge 16 may further comprise a blade hook 90 connected to a distal end 84 of the blade 22, wherein the hook 90 and reel 24 are positioned on opposite sides of the slot 144.

Referring to FIGS. 1-4, the coil spring assembly 14 may include a coil spring housing 34, the shaft 50, the coil spring 18 and the first coupler 20.

The coil spring assembly 14 may be interchangeably referred to as spring cartridge. As will be clear from the discussions below, a connection between the blade reel 24 and the spring cartridge 14 uses a tapered spline configuration for easy assembly with minimal radial thickness. Also, the connection between the blade reel 24 and the spring cartridge 14 uses steel material on the coil spring 18, the blade 22 or both.

The coil spring housing 34 may include a cylindrical shaped configuration. In some embodiments the coil spring assembly 14 may be fully sealed from ingress. The coil spring housing 34 may include a first wall 36 and peripheral/circumferential side walls 38 extending away from the first wall 36, and a second wall 39 opposing the first wall 36. The first wall 36 and the circumferential side walls 38 may together define a storage space 40 and an outwardly facing opening 42. The first wall 36 and the opposing side wall 39 may be disposed at a first end 44 and a second end 46 of the circumferential side walls 38, respectively. The first wall 36 may be fixedly connected to the circumferential side walls 38 at their first end 44, while the second wall 39 may be detachably/removably connected to the circumferential side walls 38 at their second end 46. The second wall 39 may be configured to cover the storage space 40 and the outwardly facing opening 42 of the coil spring housing 34. As will be clear from the discussions below, the coil spring 18 and at least a portion of the shaft 50 are received in the storage space 40. The shaft 50 may be considered to be part of the coil spring assembly 14.

The first wall 36 may include an opening 56. The opening 56 of the first wall 36 may be disposed centrally (i.e., in a central portion CP) in the first wall 36. The opening 56 of the first wall 36 may be configured to allow a first end portion 48 of the shaft 50 to pass therethrough such that the first end portion 48 of the shaft 50 may be fixedly connected to a portion 58 of the housing 12/the displaceable panel 17 as will be described in detail in the discussions below.

Similarly, the second wall 39 may include an opening 54. The opening 54 of the second wall 39 may be disposed centrally (i.e., in a central portion CP') in the second wall 39. The opening 54 of the second wall 39 may be configured to allow a second end portion 52 of the shaft 50 to pass therethrough such that the second end portion 52 of the shaft 50 may be fixedly connected to a portion 60 (e.g., see FIGS. 9-10) of the housing 12 as will be described in detail in the discussions below.

The coil spring housing 34 may include a lock receiving portion 114 that is configured to engage with a lock 112 upon displacement of the displaceable panel 17 from the closed position to the open position. The lock receiving portion 114 may be one of a plurality of lock receiving portions 114. The plurality of lock receiving portions 114 are disposed circumferentially along an outer surface 153 of the second wall 39 of the coil spring housing 34.

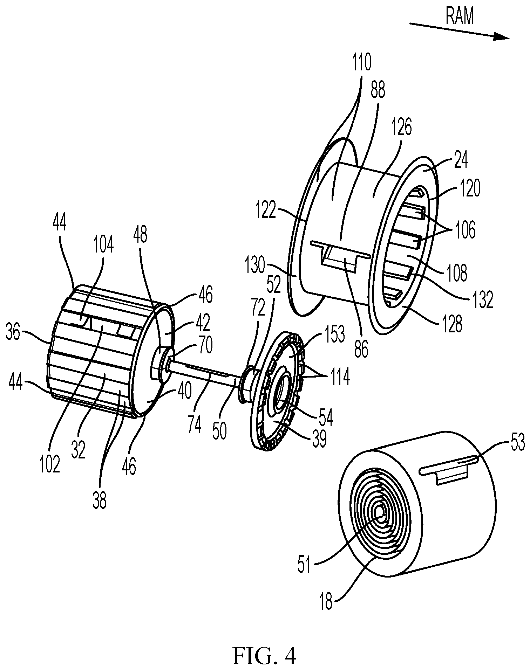

As shown in FIG. 4, the coil spring housing 34 of the coil spring assembly 14 may be made of a molded plastic and may be provided with a slot/an opening 102 in a central cylindrical wall portion 104 thereof. The slot 102 of the coil spring assembly 14 may be configured to receive a second longitudinal end of the coil spring 18 to thereby secure the second longitudinal end of the coil spring 18 to the coil spring assembly 14.

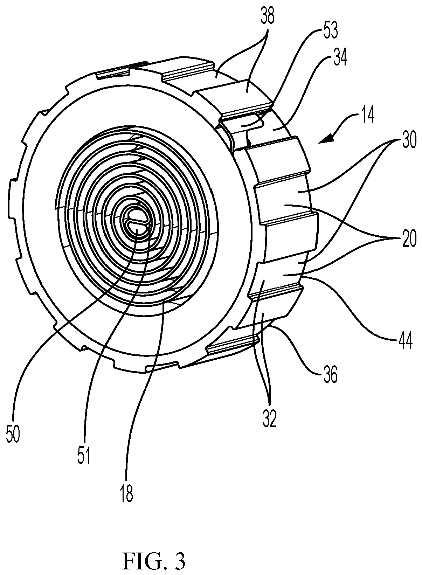

The coil spring 18 may be constructed and arranged to be received and stored within the coil spring housing 34 of the coil spring assembly 14. The coil spring 18 may be constructed and arranged to rotate the coil spring assembly 14 and the reel 24 with respect to the housing 12 in a direction to wind the elongated blade 22 about the reel 24 when the blade 22 is extending outwardly of the blade opening 82. Referring to FIGs. 3 and 4, the coil spring 18 may include a first longitudinal end 51 and the opposing second longitudinal end 53. The first longitudinal end 51 of the coil spring 18 may be secured to the shaft 50 via a slot 74 (see FIG. 4), and the second longitudinal end 53 of the coil spring 18 may be secured to the coil spring assembly 14 via the slot 102. The coil spring 18 may be a thin, flat ribbon of metal (e.g., the metal being steel).

The shaft 50 may be constructed of, for example, a plastic or metal material. The shaft 50 may be axially extending and may be fixed at a central portion of the housing 12. The shaft 50 may have noncircular connection portions 62, 64 at ends 48, 52 thereof. The connection portions 62, 64 of the shaft 50 are configured to interengage with noncircular connection portions 58, 60 of the housing 12 (e.g., in a central region of the housing 12).

In the illustrated embodiment, the connection portions 62, 64 of the shaft 50 may include noncircular recesses that may be configured to receive and engage with the noncircular projections 58, 60 of the housing 12. In another embodiment, the connection portions 62, 64 of the shaft 50 may include noncircular projections that may be configured to receive and engage with the noncircular recesses of the housing 12. The construction of the recesses may be identical, and the construction of the protections may be identical. The projections may have exterior noncircular cross-sections and may be configured to be received within recesses having complementary non-circular interior cross-sections. The noncircular interior and exterior cross-sections cooperate to prevent rotation of the shaft 50 with respect to the housing 12 when the ends of the shaft 50 are mounted interengageably connected with portion of the housing 12 in the assembled rule assembly 10. Referring to FIGS. 1, and 9-10, the connection portions 58, 60 of the housing 12 are disposed on the displaceable panel 17 and the first housing portion 12a, respectively.

The end 52 of the shaft 50 may be interiorly threaded to threadedly receive a fastener (not shown) therein. The fastener may extend through a central hole 66 (FIGS. 9-10) formed in the first housing member 12a of the housing 12 and may be configured to threadedly engage internal threading in the end 52 of the shaft 50. The fastener may extend through the connection portion 64 of the shaft 50 and the connection portion 60 of the first housing portion 12a, when the fastener is disposed in the central hole 66 and the threaded interior end 52 of the shaft 50. The interengaging connection between the end 52 of the shaft 50 and the first housing member 12a of the housing 12 may be configured to provide a fixed configuration of the shaft 50 at the end 52 of the shaft 50.

Similarly, the end 48 of the shaft 50 may be configured to receive a fastener (not shown) therein. The fastener may extend through a central hole 68 formed in the displaceable panel 17 of the housing 12 and may be configured to be received in the end 48 of the shaft 50. The fastener may extend through the connection portion 62 of the shaft 50 and the connection portion 58 of the displaceable panel 17, when the fastener is disposed in the central hole 68 of the displaceable panel 17 and the end 48 of the shaft 50. The fastener through the end 48 of the shaft 50 and the displaceable panel 17 of the housing 12 may be optional. The interengaging connection between the end 48 of the shaft 50 and the displaceable panel 17 of the housing 12 may be configured to provide a fixed configuration of the shaft 50 at the end 48 of the shaft 50.

A belt clip (not shown) may be secured to one side of the housing 12 by one of the above-described fasteners. The belt clip may be generally used to attach the rule assembly 10 to the belt of a user, or other attachment point. The belt clip may be made from, for example, a metal material.

Each end 48, 52 of the shaft 50 may extend through the openings 56, 54 of circular cross-section formed in the first wall 36 and the second wall 39 of the coil spring assembly 14. The portions of the shaft 50 that extend through the openings 56, 54 in the coil spring assembly 14 have circular exterior cross sections.

Flanges 70, 72 on the shaft 50 may be configured to engage with annular grooves in the first and the second walls 36, 39 of the coil spring assembly 14 (e.g., annular grooves surround the openings 56, 54) to guide the rotation of the coil spring assembly 14 on the shaft 50. Thus, the coil spring assembly 14 may be rotatably mounted on the shaft 50 for bi-directional rotational movement of the coil spring assembly 14 with respect to the housing 12. The shaft 50 may be internally slotted (see the slot 74 in FIG. 4) to receive the first longitudinal end (not shown) of the coil spring 18 to thereby secure the first longitudinal end of the coil spring 18 to the shaft 50.

The spline may generally be a ridge/tooth on a surface that is configured to match with a groove/slot on a surface of a mating piece/part/component. The mating pieces/parts/components may include the coil spring housing 34 and the reel 24.

The first coupler 20 of the coil spring assembly 14 may include inner splines 30. The inner splines 30 of the coil spring assembly 14 may form part of the outer wall 32 of the coil spring housing 34. The coil spring assembly 14 may include a plurality of inner splines 30. The inner splines 30 may be equally spaced and may be disposed circumferentially on the outer wall 32 of the coil spring housing 34. The inner splines 30 may be interchangeably referred to as internal splines. The inner splines 30 may be grooves/slots where outer splines 106 (discussed in detail below) fit into it, preventing movement between the two parts (e.g., the coil spring housing 34 and the blade cartridge 16/the reel 24) and causing them to be rotatably coupled to each other. The inner splines 30 may be parallel key splines. The sides of the straight sided/parallel inner spline 30 may be straight. That is, the sides of the equally spaced inner splines 30 may be parallel in both directions, radial and axial. The inner splines 30 may be tapered key splines. The sides of the tapered inner spline 30 may be tapered.

Referring to FIG. 4, the inner splines 30 near the ends 44 of the coil spring housing 34 may generally be open so as to receive the outer splines 106 of the blade cartridge 16/the reel 24 therein, while the inner splines 30 near the ends 46 of the coil spring housing 34 may generally be closed off by the second wall 39 of the coil spring housing 34. The second wall 39 of the coil spring housing 34 may be configured to prevent further axial movement between the outer splines 106 of the reel 24 and the inner splines 30 of the coil spring assembly 14 after the outer splines 106 of the reel 24 and the inner splines 30 of the coil spring assembly 14 are rotatably coupled with each other.

The inner splines 30 of the coil spring assembly 14 may be in sliding engagement with the outer splines 106 of the blade cartridge 16/the reel 24 as the blade cartridge 16/the reel 24 and the coil spring assembly 14 are being rotatably coupled to each other. The inner splines 30 of the coil spring assembly 14 may extend substantially along the entire axial length of the circumferential side wall 38 of the coil spring assembly 14.

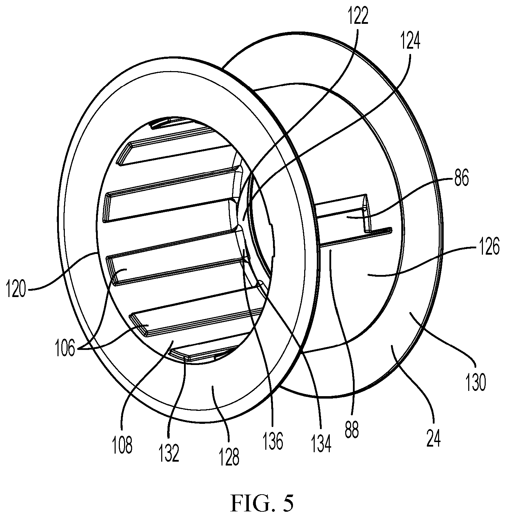

Referring to FIGS. 4-6, the reel 24 may have a first end portion 120 and an opposing second end portion 122. The reel 24 may include a cylindrical/peripheral side wall 126 extending between the first end portion 120 and the second end portion 122. The first end portion 120 of the reel 24 may include a first wall portion 128 extending perpendicular to and outwardly away from the cylindrical/peripheral side wall 126. The second end portion 122 may include a second wall portion 130 extending perpendicular to and outwardly away from the cylindrical/peripheral side wall 126 and a third wall portion 124 extending perpendicular to and inwardly away from the cylindrical/peripheral side wall 126.

The reel 24 may be made of a molded plastic and may be provided with a slot or an opening 86 in a central cylindrical wall portion 88 thereof. The slot 86 of the reel 24 may be configured to receive the first longitudinal end of the blade 22 to thereby secure the first longitudinal end of the blade 22 to the reel 24. The second longitudinal free end (or the distal end) 84 of the blade 22 may extend generally outwardly of the reel 24.

The reel 24 may have an outer wall containing the blade 22. The blade reel 24 may be configured to enclose the blade 22 on three sides. For example, the reel 24 may have outer surfaces 110 (e.g., of the cylindrical/peripheral side wall 126, of the first wall portion 128 and of the second wall portion 130) that are configured to contain the blade 22.

The second coupler 26 may form part of the reel 24. The second coupler 26 of the blade cartridge 16 may include outer splines 106. The outer splines 106 of the blade cartridge 16 may form part of an inner wall 108 of the reel 24. The blade cartridge 16 may include a plurality of outer splines 106. The outer splines 106 may be equally spaced and may be disposed circumferentially on the inner wall 108 of the reel 24. The outer splines 106 may be interchangeably referred to as external splines. The outer splines 106 may be ridges/teeth that fit into the grooves/slots of the inner splines 30, preventing movement between the two parts (e.g., the coil spring housing 34 and the blade cartridge/reel 24) and causing them to be rotatably coupled to each other. The outer splines 106 may be parallel key splines. The sides of the straight sided outer spline 106 may be straight. That is, the sides of the equally spaced outer splines 106 may be parallel in both directions, radial and axial. The outer splines 106 may be tapered key splines. The sides of the outer splines 106 may be tapered.

Referring to FIGS. 4-6, the outer splines 106 near the end portions 120 of the reel 24 may generally be open so as to engage with the inner splines 30 of coil spring assembly 14, while the outer splines 106 near the end portions 122 of the reel 24 may generally be closed off by the third wall portion 124 of the reel 24. The third wall portion 124 of the reel 24 may be configured to prevent further axial movement between the outer splines 106 of the reel 24 and the inner splines 30 of the coil spring assembly 14 after the outer splines 106 of the reel 24 and the inner splines 30 of the coil spring assembly 14 are rotatably coupled with each other.

Each outer spline 106 may include a first end 132 and a second end 134. Each outer spline 106 may have enlarged portion 136 at the second end 134. These enlarged portions 136 near the second ends 134 of the outer splines 106 may also be configured to prevent further axial movement between the outer splines 106 of the reel 24 and the inner splines 30 of the coil spring assembly 14 after the outer splines 106 of the reel 24 and the inner splines 30 of the coil spring assembly 14 are rotatably coupled with each other.

The outer splines 106 of the blade cartridge 16/the reel 24 may be in sliding engagement with the inner splines 30 of the coil spring assembly 14 as the outer splines 106 of the reel 24 and the inner splines 30 of the coil spring assembly 14 are being rotatably coupled with each other. The outer splines 16 of the blade cartridge 16 may extend substantially along the entire (axial) length of the circumferential side wall of the reel 24.

With the first end portion 120 of the reel 24 positioned facing the first end 44 of the coil spring assembly 14, the reel 24 may be configured to move axially (in the direction of an arrow RAM as shown in FIG. 4) such that the outer splines 106 of the reel 24 and the inner splines 30 of the coil spring assembly 14 engage with each other and the reel 24 and the coil spring assembly 14are rotatably coupled with each other.

The blade 22 may be formed of a ribbon of metal (e.g., the metal being steel), and a top concave surface of the blade 22 may be printed with measuring lines and digits (not shown) for measuring lengths and distances. The blade 22 may include a first longitudinal end (that may be secured to the reel 24 via slot 86 in FIG. 4) and the opposing, second longitudinal free end 84 of the blade 22 may extend generally outwardly of the reel 24. The blade 22 may be constructed and arranged with respect to the housing 12 to extend generally from a position tangential of the reel 24 outwardly through the blade opening 82 provided in the housing 12.

The blade 22 may be generally movable between a fully retracted position to a fully extended position. It can be appreciated that as the blade 22 is unwound from the reel 24, the coil spring 18 may be wound around the rigidly fixed shaft 50. This winding of the coil spring 18 around the shaft 50 stores energy in the coil spring 18 to provide spring powered rewinding of the blade 22 around the reel 24 when the extended blade 22 is released.

The blade 22 may be constructed of a ribbon of sheet metal that is shaped during the manufacturing to have a normal or memory configuration that has a generally arcuate or concavo-convex transverse cross-section. When a portion of the blade 22 is wound about the reel 24, the wound portion has a flat transverse cross-section and the wound layers of the coiled blade provide the wound blade with an abutting volute coil configuration. In other words, when the blade 22 is wound around the reel 24, it has the flat cross-section and when the blade 22 is withdrawn from the housing 12 to measure an object, it returns to the concavo-convex cross-section. Thus, the coil spring 18 is constructed and arranged to rotate the coil spring assembly 14 (and, thus, the reel 24) about the shaft 50 with respect to the housing 12 in a direction to wind up the elongated blade 22 when extending outwardly of the blade opening 82 in a normal concavo-convex cross-sectional configuration onto the reel 24 in an abutting volute coil formation in a flattened cross-sectional configuration. The concavo-convex cross-section provides the extended blade with rigidity and maintains the blade essentially straight in the longitudinal direction. The concavo-convex cross-section of the blade 16 generally provides the unsupported blade 22 with blade standout. The concavo-convex cross-section of the blade 22 generally includes an arcuate central section and integral end sections. In various embodiments, the concavo-convex cross-sectional configuration of the blade 22 can be of the type described in commonly assigned U.S. Patent No. 6,324,769, that is hereby incorporated by reference in its entirety.

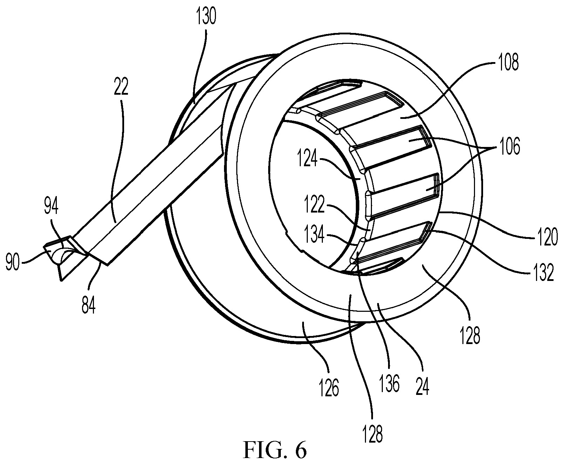

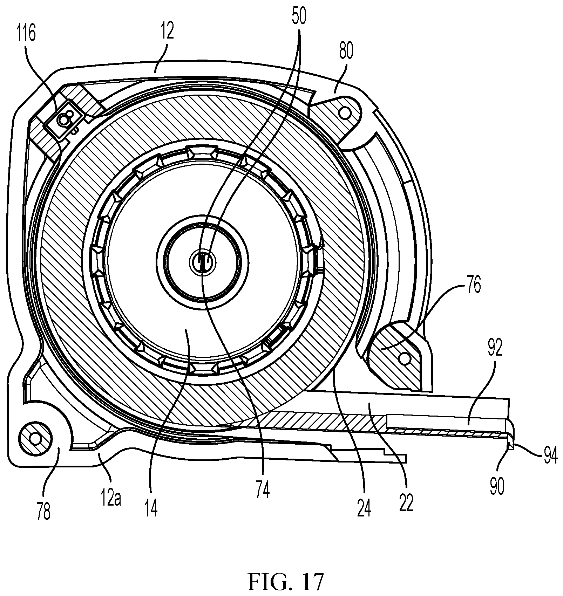

Referring to FIGS. 6 and 17, the elongated blade 22 may have the end hook 90 on the free/distal end 84 thereof. The end hook 90 may include a mounting portion 92 and a hook portion 94 bent at a generally right angle from an end of the mounting portion 92. In one embodiment, the end hook 90 is formed of, for example, a sheet metal material of a predetermined thickness. The hook portion 94 may have a generally U-shaped configuration. The mounting portion 92 may have a generally concavo-convex configuration. The mounting portion 92 may have a generally flat configuration. The end hook 90 is mounted on the free end 84 of the blade 22 with the mounting portion 92 thereof secured in engagement with a concave (upper) side of the free end 84 of the blade 22 and in overlying relation thereto. In one embodiment, the connection between the free end 84 of the blade 22 and the mounting portion 92 may permit limiting sliding movement therebetween.

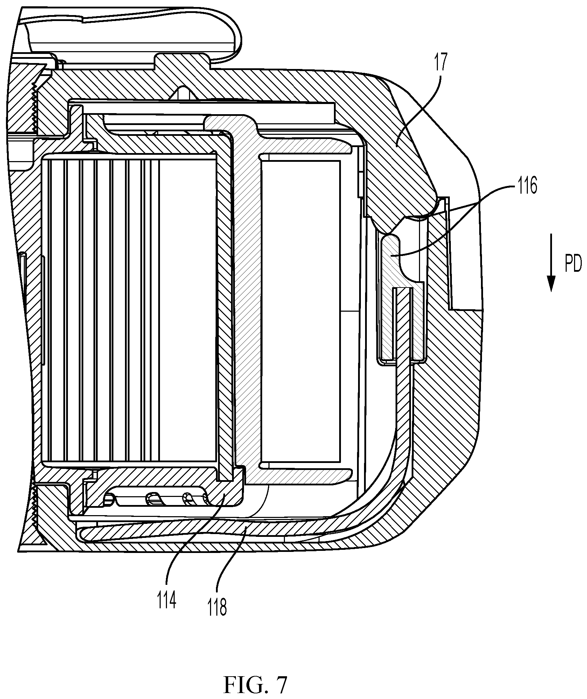

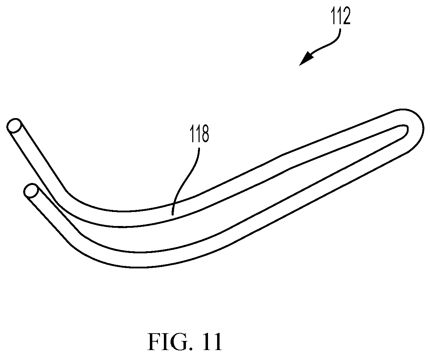

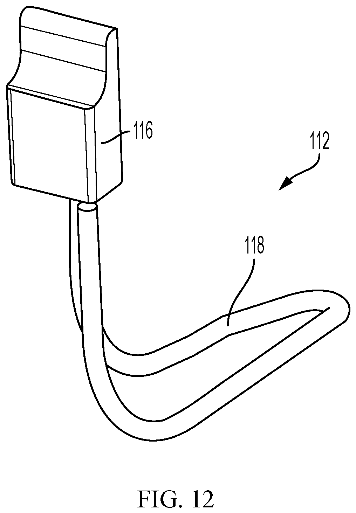

Referring to FIGS. 7-8, and 10-12, the retractable rule assembly 10 may include the lock 112 constructed and arranged to engage with the coil spring assembly 14 to prevent rotation for the blade cartridge 16 to be removed from the housing 12. The lock 112 may interchangeably referred to as lock mechanism. The lock 112 may be configured to prevent the coil spring assembly 14 from rotating with either the opening of the displaceable door 17, latch, or the partial removal of the blade reel 24.

The lock 112 may be configured to be movable between a locked position and a released position. The lock 112 is operatively connected with the displaceable panel 17 such that the lock 112 moves from the released position to the locked position upon displacement of the displaceable panel 17 from the closed position to the open position.

The lock 112 may be configured to engage with the lock receiving portion 114 of the coil spring housing 34 upon displacement of the panel 17 from the closed position to the open position.

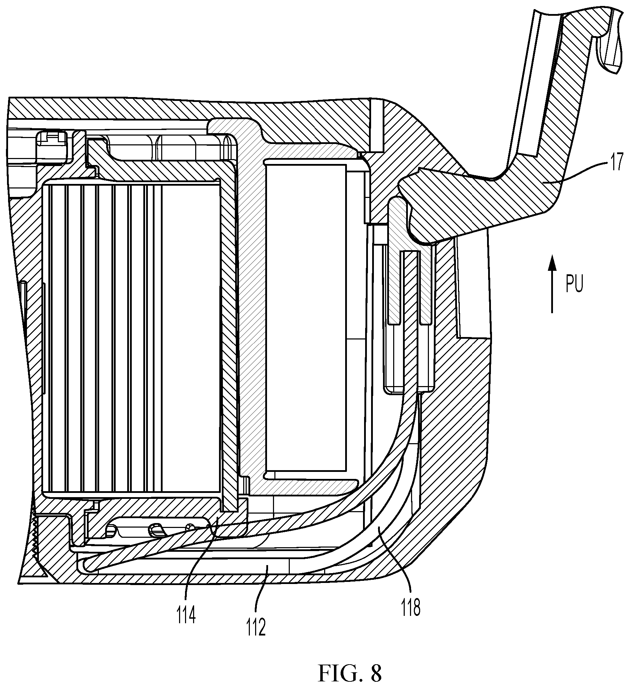

FIGS. 7 and 8 show cutaway views of the retractable rule assembly 14, wherein the displaceable panel 17 is in the closed position and a lock 112 is in its released position in FIG. 7 and the displaceable panel 17 is in the open position and the lock 112 is in its lock position in FIG. 8. The lock 112 may interchangeably referred to as a door driven lock as the lock 112 is moved from the released position to the locked position upon displacement of the displaceable panel 17 from the closed position to the open position.

The lock 112 may include a spring 118 and a plunger 116. The displaceable panel 17, when in its closed position, may be configured to push the plunger 116 and the spring 118 in the direction of an arrow PD (see FIG. 7). When the displaceable panel 17 is in its closed position, the lock 112 is maintained its released position (in which the spring 118 does not engage with the lock receiving portion 114 of the coil spring housing 34). When the displaceable panel 17 is moved from its closed position to its open position, the plunger 116 and the spring 118 are displaced in the direction of an arrow PU (see FIG. 8). This displacement of the spring 118 causes portions of the spring 118 to engage with the lock receiving portion 114 of the coil spring housing 34.

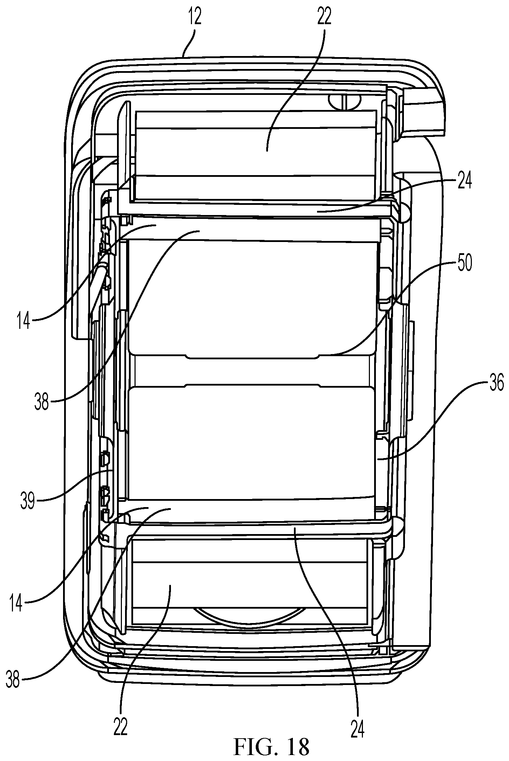

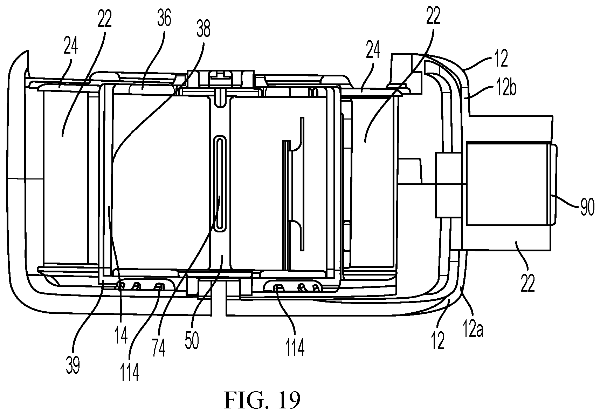

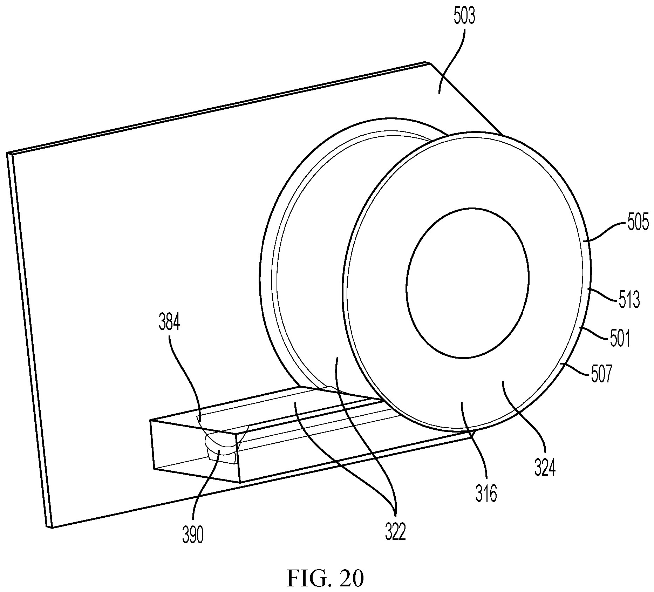

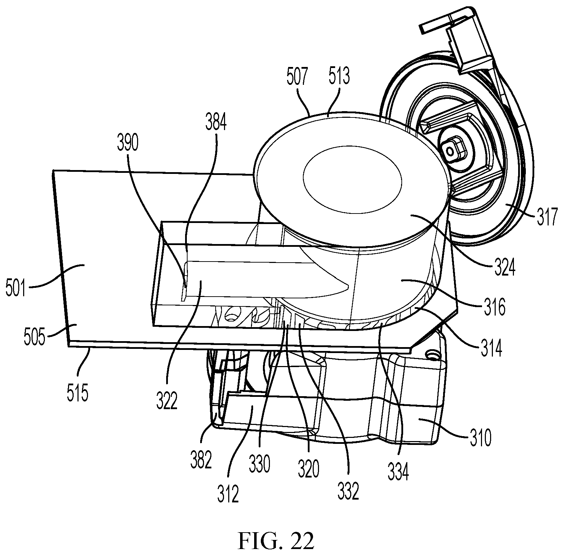

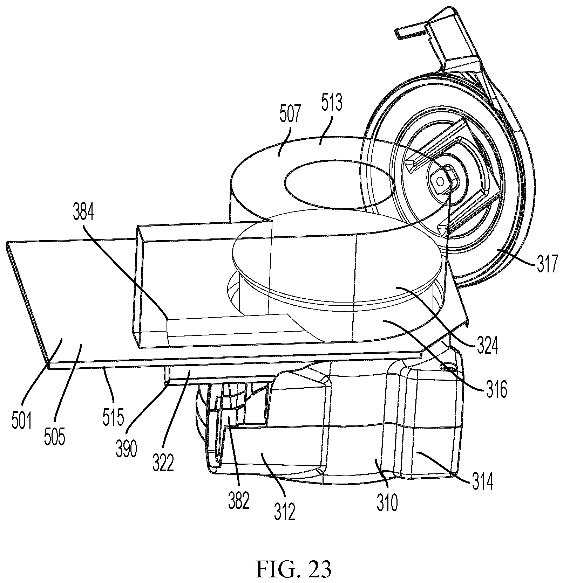

Referring to FIGS. 20-23, the present patent application also may also provide a blade cartridge assembly 316 for a retractable rule assembly 310. The blade cartridge assembly 316 may include an elongated blade 322, a reel 324, and a second coupler 326. The blade 322 may be configured to be wound on the reel 324. The reel 324 may have an outer wall (not shown in FIGS. 20-23 but shown in FIGS. 1-19) containing the blade 322. The second coupler 326 may form part of the reel 324 and is constructed and arranged to engage with a first coupler 320 of a coil spring assembly 314 when the blade cartridge assembly 316 is mounted in a housing 312 of the retractable rule assembly 310, such that the first coupler 320 and the second coupler 326 become rotatably coupled. The blade cartridge assembly 316 may further comprise a blade hook 390 connected to a distal end 384 (also referred to as the free end) of the blade 322. The first coupler 320 of the coil spring assembly 314 may include inner splines 330 that form part of an outer wall 332 of a coil spring housing 334 of the coil spring assembly 314. The second coupler 326 of the blade cartridge assembly 316 comprises outer splines 3106. The outer splines 3106 of the blade cartridge assembly 316 form part of an inner wall 3108 of the reel 324.

The use of the same or similar reference numerals in different figures indicates similar, related, or identical items. The embodiments have many identical parts in structure, and therefore the description may have been omitted. Where the construction and/or operation of such embodiment features/parts is not described, the reader may assume that construction and operation are the same as described in other portions of the present patent application, having regard to those modifications apparent to a person of ordinary skill in the art. The blade cartridge assembly 316 as shown and described with respect to FIGS. 20-23 is very similar to the blade cartridge assembly as shown and described with respect to FIGS. 1-19, except for the differences noted in the present patent application.

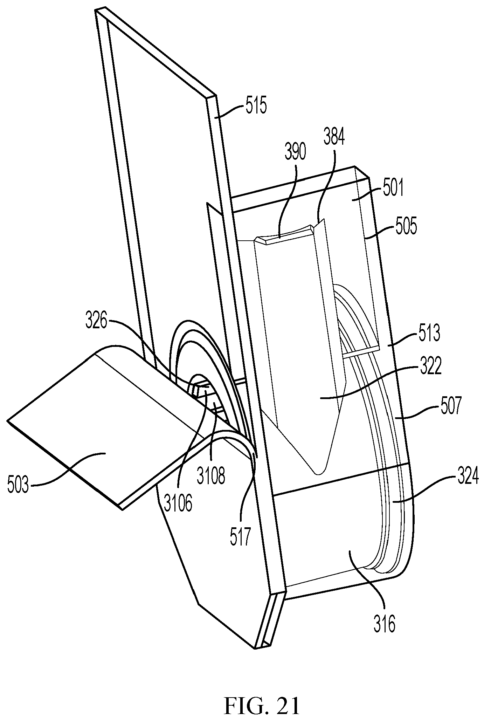

Referring to FIGS. 20-23, the blade cartridge assembly 316 may include a blade cartridge assembly package 501 that comprises a backing 503 and a cover 505. The cover 505 may include a cavity 507 formed therein. The cavity 507 and the backing 503 are configured to form a space 511 for enclosing the blade cartridge assembly 316. The cover 505 includes a clear plastic portion 513 that forms the cavity 507. The blade cartridge assembly 316 is disposed between the clear plastic portion 513 and the backing 503. The cover 505 may further comprise a backing engaging portion 515. The backing 503 may further comprise a cover engaging portion 517. The cover engaging portion 517 and the backing engaging portion 515 may be configured to releasably secure the backing 503 to the cover 505. As shown in FIG. 21, the backing 503 may be configured to be removable from the cover 505 to facilitate access to the blade cartridge assembly 316 disposed between the cover 505 and the backing 503. The backing 503 may be substantially flat.

The blade cartridge assembly package 501 may include a display hanger opening/slot formed through both the cover 505 and the backing 503 can be provided to facilitate hanging the blade cartridge assembly 316 on a display hanger at a store or other retail locations for display to potential users. The backing 503 may be configured to display information about the blade cartridge assembly 316 thereon. The product marketing (e.g., logos, text, images, patterns, designs, and other marketing material) or product information of the blade cartridge assembly 316 may be printed directly on the backing 503 (and/or the cover 505). In addition, instructions for the product may also be printed on the backing 503 (and/or the cover 505). The cover 505 may be either substantially transparent or substantially translucent. The retail packing of the blade reel 24 may be configured to enable the operator/user to not touch the blade reel 24 during the replacement procedure.

Referring to FIGS. 20-23, the present patent application a method for removing and replacing the blade cartridge 316 of the retractable rule assembly 310. The retractable rule assembly 310 may comprise the housing 312. The housing 312 may include a displaceable panel 317. The displaceable panel 317 may be selectively moved between a closed position and an open position. The retractable rule assembly 310 may comprise the coil spring assembly 314 disposed in the housing 312. The coil spring assembly 314 may include the coil spring and the first coupler 320. The blade cartridge 316 may include a replaceable blade cartridge 316 configured to be selectively mounted in the housing 312. The replaceable blade cartridge 316 comprises the elongated blade 322, the reel 324, and the second coupler 326. The blade 322 may be wound on the reel 324 and constructed and arranged to extend outwardly through an opening 382 in the housing 312.

The method may comprise (1) moving the displaceable panel 317 of the retractable rule assembly 310 from the closed position to the open position, (2) removing the replaceable blade cartridge 316 from the housing 312 when the displaceable panel 317 is in the open position, and (3) positioning a new replaceable blade cartridge 316 in the housing 312 when the displaceable panel 317 is in the open position, the new replaceable blade cartridge 316 comprising a new elongated blade 322, a new reel 324, and a new second coupler 326. The new blade 322 may be wound on the new reel 324 and constructed and arranged to extend outwardly through the opening 382 in the housing 312. The opening 382 may be interchangeably referred to as blade opening.

As clear from the discussions above, the moving procedure (i.e., moving the displaceable panel 317 of the retractable rule assembly 310 from the closed position to the open position) causes the lock 112, which is operatively connected to the displaceable panel 317, to move from its released position to its locked position. In its locked position, the lock 112 may be configured to engage with the coil spring assembly 314 to prevent rotation for the blade cartridge 316 to be removed from the housing 312. Preventing the rotation of the coil spring assembly 314 may facilitate the removal of the replaceable blade cartridge 316 from the housing 312. That is, the moving the displaceable panel 317 of the retractable rule assembly 310 to the open position includes locking the coil spring assembly 314 to prevent rotation of the blade cartidge 316 to be removed from the housing 312.

FIGS. 20-23 do not show the removing procedure and show the positioning procedure. The removing procedure (e.g., removing the replaceable blade cartridge 316 from the housing 312 when the displaceable panel 317 is in the open position) may include disengaging the second coupler 326 of the replaceable blade cartridge 316 from the first coupler 320 of the coil spring assembly 314 disposed in the housing 312. This may be performed by simply holding outer edges 393 (also shown in FIG. 1A) of the reel 324 and pulling/moving the reel 324 in an axial or a longitudinal direction (in the direction of the arrow OPD as shown in FIG. 1A) and outwardly from the housing 312 and the coil spring assembly 314. The outer edges 393 of the reel 324 are outer peripheral or circumferential edges of the reel 324. This action of moving the reel 324 (in the direction of the arrow OPD) may disengage the second coupler 326 of the replaceable blade cartridge 316 from the first coupler 320 of the coil spring assembly 314 disposed in the housing 312 so as to facilitate the removal of the replaceable blade cartridge 316 from the housing 312. The removal of the replaceable blade cartridge 316 from the housing 312 may be performed when the displaceable panel 317 is in the open position.

Referring to FIGS. 20-23, the positioning procedure may include engaging the new second coupler 326 of the new replaceable blade cartridge 316 with the first coupler 320 of the coil spring assembly 314 disposed in the housing 312, such that the first coupler 320 and the new second coupler 326 become rotatably coupled. When the first coupler 320 and the new second coupler 326 are rotatably coupled, the coil spring assembly 314 is biased to rotate the new replaceable blade cartridge 316 in a direction that winds the new blade 322 onto the new reel 324 when the new blade 322 is extending outwardly of the housing 312.

The positioning procedure may be performed after (a) removing the backing 503 of the blade cartridge assembly package 501 from its cover 505, and (b) positioning the blade cartridge assembly package 501 (with the new replaceable blade cartridge 316 disposed in the cavity 507/the cover 505/clear plastic portion 513 of the blade cartridge assembly package 501 and with the backing 503 removed) with respect to the empty retractable rule assembly 10 (i.e., without the blade cartridge assembly 16 therein) such that a center of the new replaceable blade cartridge 316 aligns with a center of the coil spring assembly 314 disposed in the housing 312. Positioning the blade cartridge assembly package 501 with respect to the empty retractable rule assembly 10 may include lining up the new replaceable blade cartridge 316 with the empty case 10.

Removing the backing 503 of the blade cartridge assembly package 501 from its cover 505 may include simply peeling off the backing 503 from its cover 505 as shown in FIG. 21. Removing the backing 503 of the blade cartridge assembly package 501 from its cover 505 may include disengaging/separating the cover engaging portion 517 and the backing engaging portion 515 from each other.

The positioning procedure may also include moving the new replaceable blade cartridge 316 in the axial or a longitudinal direction (in the direction of the arrow IIP as shown in FIG. 1A) and towards and into the housing 312. The moving may be performed by using the cover 505/the clear plastic portion 513 of the blade cartridge assembly package 501 (i.e., moving the cover 505/the clear plastic portion 513 of the blade cartridge assembly package 501 in the axial or a longitudinal direction (in the direction of the arrow IID as shown in FIG. 1A) and towards the housing 312). That is, the cover 505/the clear plastic portion 513 of the blade cartridge assembly package 501 may be pressed down to install new blade reel 324 (with the blade 322 wound thereon) into the retractable rule assembly 310.

During the moving of the new replaceable blade cartridge 316 into the housing 312, the new second coupler 326 of the new replaceable blade cartridge 316 may be engaged with the first coupler 320 of the coil spring assembly 314 disposed in the housing 312, such that the first coupler 320 and the new second coupler 326 become rotatably coupled.

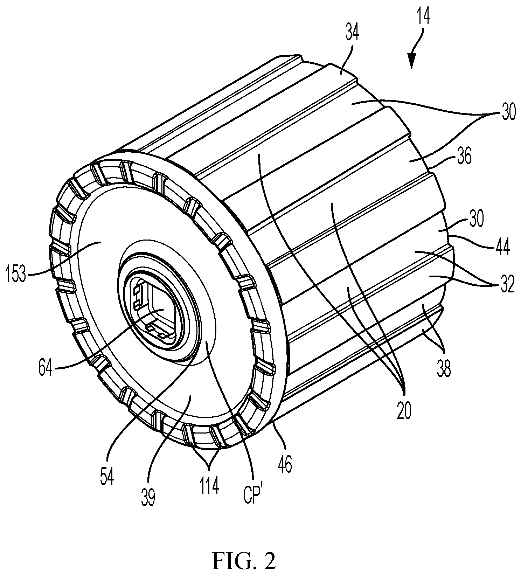

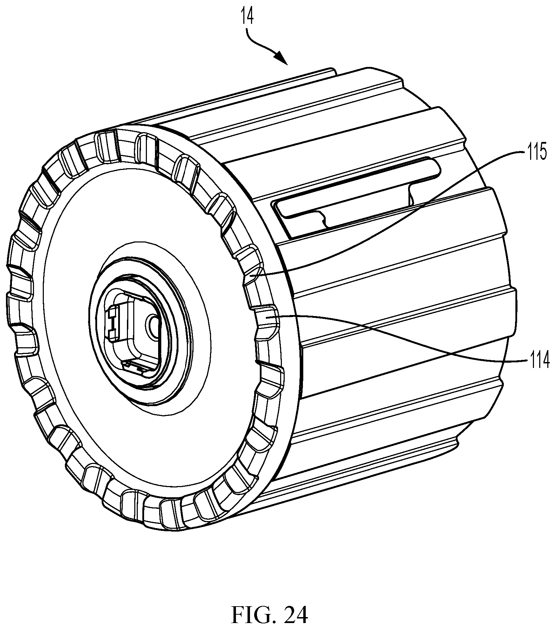

FIG. 24 shows a ratchet system for the spring cartridge assembly in accordance with another embodiment of the present patent application. FIG. 24 shows an alternative embodiment to FIG. 2 of the present patent application. The ratchet system of FIG. 24 may be configured to slip to one side so as to allow the spring 18 to tension independently of the blade 22. The spring 118 may be deflected out of the lock receiving portion/the groove 114 by a ramp 115 (as in shown in FIG. 24) on an edge of the groove 114. This will enable the spring 118 to change the preload on it when the door is in the open position. The rotation of the spring cartridge assembly 14 against the ratchet is configured to change the preload/torque on the spring 18 of the lock when the door is in the open position The user can rotate the spring cartridge assembly 14 against the ratchet to increase the spring 118's preload/torque.

A bottom wall of the housing 12 may provide a finger grip enhancing configuration for a gripping hand of the user. The bottom wall may have a forward end portion disposed adjacent to the blade opening 82 and a rearward end portion at the opposite end of the bottom wall. A portion of the bottom wall (i.e., between the forward and the rearward end portions) may be generally recessed to provide the finger grip enhancing configuration for the gripping hand of the user. The gripping area on the bottom wall of the housing 12 may be covered with, for example, the overmolded rubber material or a rubber-like polymeric material. It can thus be appreciated that the housing 12 is constructed to be easily held in one hand of a user such that the user's fingers may engage the finger grip enhancing portion and the user's palm and thumb may generally be in overlying relation with a top portion of the housing 12. A peripheral portion of housing 12 may also be provided with a coating around gripped portions of the housing 12 to provide increased frictional engagement between the housing 12 and a user's hand and to provide a relatively soft comfortable surface for the user's hand. The coating may be made from, for example, a rubber-like material.

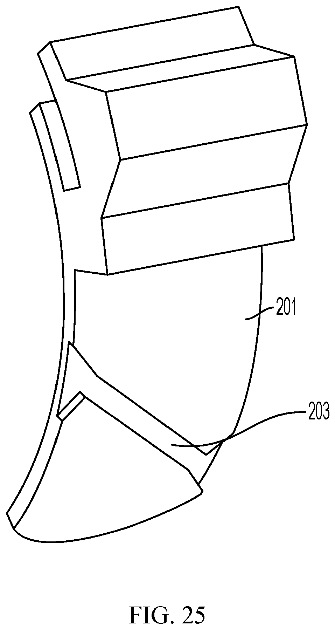

The retractable rule assembly 10 may also include a holding assembly (may be interchangeably referred to as lock mechanism or lock assembly or slidelock) 201 (as shown in FIG. 25) that is constructed and arranged to be manually actuated to hold the blade 22 in any position of extension outwardly of the housing/blade opening 82 and to release the blade 22 from any position in which it is held. In various embodiments, the holding assembly can be of the type described in commonly assigned U.S. Patent No. 8,117,763, that is hereby incorporated by reference in its entirety.

When taking a measurement, the user typically holds the housing 12 in one hand and manually pulls the blade 22 out of the housing 12 with the other hand. When a sufficient length of blade 22 has been withdrawn from the housing 12, the user can lock/hold the blade 22 with respect to the housing 12 using the holding member to prevent the blade 22 from retracting back into the housing 12 (under the spring force of the coil spring 18) when the user releases the blade 12. When the measurement has been taken, the user simply releases the holding member from holding engagement with the blade 22. It can be understood that the use of the holding member when a measurement is being taken is optional. If the holding member is not used during the taking of a measurement, the user can simply hold the blade 22 with his other hand while the measurement is being taken or, alternatively, the hook member 90 can be placed in hooking engagement with the work-piece to hold the blade 22 outwardly of the housing 12 in a controlled and steady manner against the spring force of the coil spring 18 while the measurement is being taken. When the blade 22 is released after taking the measurement, the coil spring 18 rotates the coil spring assembly 14 (and the reel 24 rotatably coupled thereto) with respect to the housing 12 in a blade-winding direction to wind the blade 22 around the reel 24.

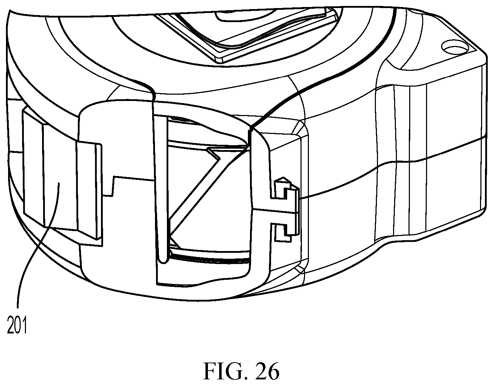

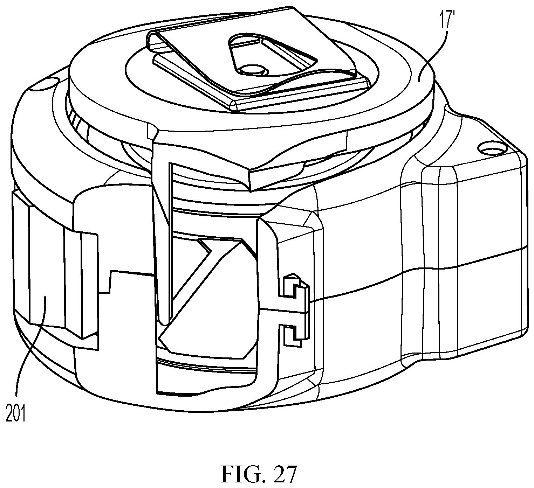

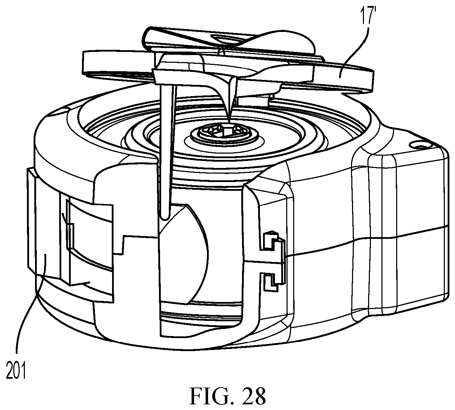

FIGS. 25-28 show another embodiment of the present patent application in which, when the door 17' is opened, it causes the slidelock 201 to lift/rise so that the blade 22 is not clamped to (unclamped from) the housing 12. As the blade 22 is unclamped from the housing 12, a user can remove the reel 24 from the housing 12. FIG. 26 shows the door 17' in its closed position, FIG. 27 shows the door 17' in its intermediate position between its open and closed positions, and FIG. 28 shows the door 17' in its open position.

In some such embodiments, if the hook 90 is not abutting the mouth of the housing 12, then the door 17' does not open (or the slidelock 201 does not lift/rise). This may be accomplished with a simple mechanism that relies on the spring force pulling the hook 90 against a release at the mouth of the housing 12 to unlock the door 17', so that the door 17' cannot be opened while the blade 22 is partially uncoiled.

FIG. 25 shows the slidelock 201 with a groove 203. The groove 203 may be angled such that a motion of a pin that is placed inside of the groove 203 will rotate the slidelock 201 between the locked position and the unlocked position. The pin may be positioned at the end of a flange of the door 17'. The pin may be disengaged from the groove 203 when door 17 is in the open position or in the closed position. There may be a wider entry on either end of the groove 203 for the pin to easily align and to enter after being disengaged.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

In one embodiment, dimensions/numerical ratios or ranges of the present patent application may be up to 5 percent, 10 percent, 15 percent or 20 percent greater than or up to 5 percent, 10 percent, 15 percent or 20 percent less than the values described throughout the present patent application. In another embodiment, dimensions/numerical ratios or ranges of the present patent application may be in the range of +/- 5 percent or+/- 10 percent of the values described throughout the present patent application.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of this application.

Although the present patent application has been described in detail for the purpose of illustration, it is to be understood that such detail is solely for that purpose and that the present patent application is not limited to the disclosed embodiments, but, on the contrary, is intended to cover modifications and equivalent arrangements that are within the spirit and scope of the appended claims. In addition, it is to be understood that the present patent application contemplates that, to the extent possible, one or more features of any embodiment can be combined with one or more features of any other embodiment.

## Claims

1. A retractable rule assembly comprising:
a housing, the housing having a displaceable panel, the displaceable panel configured to be selectively moved between a closed position and an open position;
a coil spring assembly disposed in the housing, the coil spring assembly including a coil spring and a first coupler;
a replaceable blade cartridge configured to be selectively mounted in and removed from the housing when the displaceable panel is in the open position, the replaceable blade cartridge comprising an elongated blade, a reel, and a second coupler, the blade being wound on the reel and constructed and arranged to extend outwardly through an opening in the housing,
the second coupler being constructed and arranged to engage with the first coupler when the replaceable blade cartridge is mounted in the housing, such that the first coupler and the second coupler become rotatably coupled;
wherein, when the first coupler and the second coupler are rotatably coupled, the coil spring assembly is biased to rotate the replaceable blade cartridge in a direction that winds the blade onto the reel when the blade is extending outwardly of the housing.

2. The retractable rule assembly according to claim 1, wherein the displaceable panel comprises a hinged door panel.

3. The retractable rule assembly according to either claim 1 or claim 2, wherein the displaceable panel comprises a removable door panel.

4. The retractable rule assembly according to any one of the preceding claims, wherein the first coupler of the coil spring assembly comprises inner splines, and the second coupler of the blade cartridge comprises outer splines.

5. The retractable rule assembly according to claim 4, wherein either i) the outer splines of the blade cartridge form part of an inner wall of the reel, or ii) the inner splines of the coil spring assembly form part of an outer wall of a coil spring housing.

6. The retractable rule assembly according to any one of the preceding claims, further comprising a lock constructed and arranged to engage with the coil spring assembly to prevent rotation for the blade cartridge to be removed from the housing.

7. The retractable rule assembly according to claim 6, wherein the lock is movable between a locked position and a released position, wherein the lock is operatively connected with the displaceable panel such that it moves from the released position to the locked position upon displacement of the displaceable panel from the closed position to the open position.

8. The retractable rule assembly according to claim 7, further comprising a ratchet for the spring cartridge assembly,
wherein the ratchet is configured to slip to one side so as to allow a spring of the lock to tension independently of the blade.

9. The retractable rule assembly according to claim 7, wherein the spring of the lock is configured to deflect out of a lock receiving portion of the coil spring housing by a ramp formed on an edge of the lock receiving portion, and
wherein the rotation of the spring cartridge assembly against the ratchet is configured to change a preload or a torque on the spring of the lock when the door is in the open position.

10. The retractable rule assembly according to any one of the preceding claims, further comprising a slidelock that is configured to disengage from holding the blade when the door is in the open position.

11. The retractable rule assembly according to any one of the preceding claims, further comprises an interlock disposed on the door,
wherein the interlock is configured to enable the door to move to the open position only when the blade is fully retracted.

12. The retractable rule assembly according to any one of the preceding claims, wherein the housing comprises a blade opening through which the blade extends from the housing, and
wherein the displaceable panel comprises a portion of the structure defining the blade opening, such that a side portion of the blade opening is removed to form a slot when the displaceable panel is moved to the open position, the slot providing a region through which a portion of the blade can be removed from the housing and through which a new blade can be received.

13. A replaceable blade cartridge assembly for a retractable rule assembly, comprising:
an elongated blade, a reel, and a second coupler, the blade being wound on the reel, the reel having an outer wall containing the blade;
the second coupler forming part of the reel and constructed and arranged to engage with a first coupler of a coil spring assembly when the blade cartridge is mounted in a housing of the retractable rule assembly, such that the first coupler on the housing of the retractable rule assembly and the second coupler on the replaceable blade cartridge assembly become rotatably coupled and such that an axis of rotation of the reel and an axis of rotation of the coil spring assembly are aligned.

14. The blade cartridge assembly according to claim 13, wherein the first coupler of the coil spring assembly comprises inner splines that form part of an outer wall of a coil spring housing of the coil spring assembly,
wherein the second coupler of the blade cartridge assembly comprises outer splines, and
wherein the outer splines of the blade cartridge assembly form part of an inner wall of the reel.

15. The blade cartridge assembly according to claim 13, further comprises a blade cartridge assembly package that comprises a backing and a cover,
wherein the cover includes a cavity formed therein,
wherein the cavity and the backing are configured to form a space for enclosing the blade cartridge assembly,
wherein the cover includes a clear plastic portion that forms the cavity,
wherein the blade cartridge assembly is disposed between the clear plastic portion and the backing.

16. The blade cartridge assembly according to claim 15, wherein the cover further comprises a backing engaging portion,
wherein the backing further comprises a cover engaging portion, and
wherein the cover engaging portion and the backing engaging portion are configured to releasably secure the backing to the cover.

17. The blade cartridge assembly according to claim 15, wherein the backing is configured to be removable from the cover to facilitate access to the blade cartridge assembly disposed between the cover and the backing.
